**Europäisches Patentamt**

**European Patent Office**

**Office européen des brevets**

(19)

(11) Veröffentlichungsnummer: **0 025 532**
**A2**

(12) # EUROPÄISCHE PATENTANMELDUNG

(21) Anmeldenummer: **80105134.3**

(22) Anmeldetag: **28.08.80**

(51) Int. Cl.³: **G 21 C 17/00**

(30) Priorität: **12.09.79 DE 2936882**

(43) Veröffentlichungstag der Anmeldung: **25.03.81**
**Patentblatt 81/12**

(84) Benannte Vertragsstaaten: **CH FR GB LI NL**

(71) Anmelder: **KRAFTWERK UNION AKTIENGESELLSCHAFT, Wiesenstrasse 35, D-4330 Mülheim (Ruhr) (DE)**

(72) Erfinder: **Ruthrof, Klaus, Kosbacher Weg 57, D-8520 Erlangen (DE)**
Erfinder: **Meier, Rainer, Dipl.-Ing., Tetzelweg 1, D-8520 Erlangen (DE)**

(74) Vertreter: **Mehl, Ernst, Dipl.-Ing. et al, Postfach 22 01 76, D-8000 München 22 (DE)**

(54) **Prüfeinrichtung zur Feststellung und Analyse von Materialfehlern.**

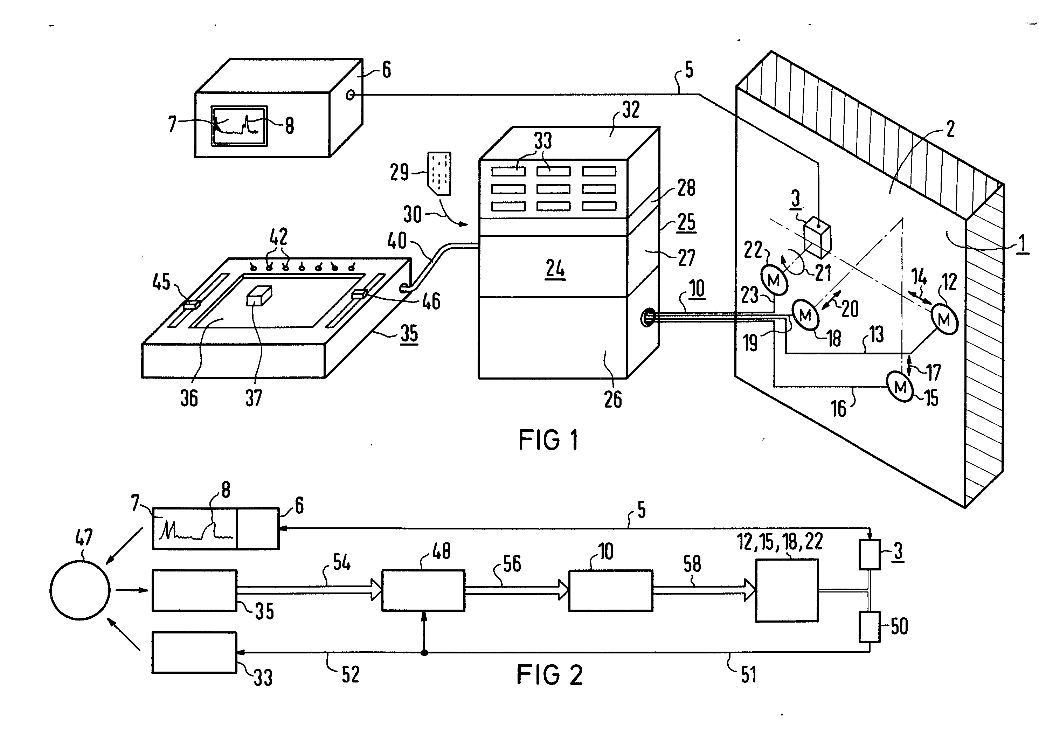

(57) Zur Feststellung und Analyse von Materialfehlern, insbesondere an druckführenden Komponenten (1) für Nuklearanlagen, kann ein Prüfkopf (3) durch einen fernsteuerbaren Manipulator (10) bewegt werden, der mindestens zwei Freiheitsgrade aufweist. Die Prüfeinrichtung umfaßt ferner ein Prüfgerät (6) für die Versorgung des Prüfkopfes (3) und zur Auswertung seiner Signale, die ein Anzeigegerät (7) für die Meßergebnisse speisen. Die Fernsteuerung erfolgt über ein Prüfprogramm (29), das einen bestimmten, insbesondere mäandrierenden Weg an der Oberfläche (2) des Prüflings (1) ergibt. Erfindungsgemäß ist zusätzlich eine Handsteuerung mit einem handbetätigten Führungselement (37) vorgesehen, das zu einer Simulationseinrichtung (35) gehört. Über ein elektronisches Übertragungssystem (24) ist das Führungselement (37) mit dem Manipulator (10) so verbunden, daß die Steuerung des Prüfkopfes (3) einer Handbetätigung entspricht (Fig. 1).

ACTORUM AG

KRAFTWERK UNION AKTIENGESELLSCHAFT     Unser Zeichen

VPA 79 P 9 3 5 1 EUR

Prüfeinrichtung zur Feststellung und Analyse von
Materialfehlern

Die Erfindung betrifft eine Prüfeinrichtung zur Feststellung und Analyse von Materialfehlern an einem Prüfling, insbesondere an druckführenden Komponenten für Nuklearanlagen, mit einem durch elektrische Betätigung in mindestens zwei Freiheitsgraden fernsteuerbaren Manipulator zur Bewegung eines Prüfkopfes, einem Prüfgerät zur Versorgung des Prüfkopfes und Auswertung seiner Signale und einem Anzeigegerät für die Meßergebnisse des Prüfkopfes, wobei der Manipulator mit einem Prüfprogramm zum automatischen Abfahren eines vorgegebenen Weges an der Oberfläche des Prüflings versehen ist.

Durch das Prüfprogramm soll der vom Manipulator getragene Prüfkopf auf einem bestimmten Prüfweg über die Oberfläche des Prüflings geführt werden. In der Regel

Sm 2 Hgr / 28.8.1979

ist der Prüfweg mäandierend mit so engem Abstand benachbarter Prüfspuren, daß zu suchende Fehler mit Sicherheit gefunden werden. Die starre Festlegung der Prüfkopfbewegung engt jedoch die Möglichkeiten der Fehleranalyse ein, zum Beispiel die Ermittlung von Form und Lage solcher Fehler.

Die Erfindung geht nach dem Vorstehenden von der Aufgabe aus, die Feststellung und Analyse von Materialfehlern zu verbessern. Sie sucht dabei nach einer Möglichkeit, das von Prüfenden bei der Handbetätigung von Prüfköpfen erlangte "Fingerspitzengefühl" zu verwerten, das sich bei der Bestimmung von Fehlern als äußerst wertvoll erwiesen hat und durch mechanisierte Vorgänge praktisch nicht erreicht werden kann.

Erfindungsgemäß ist neben der Steuerung des Manipulators mittels Prüfprogramm eine Fernsteuerung mit einem handbetätigten Führungselement vorgesehen, das dem Anzeigegerät benachbart in einer Simulationseinrichtung für den Prüfling angeordnet und über ein elektronisches Übertragungssystem mit dem Manipulator so verbunden ist, daß die Steuerung des Prüfkopfes mit dem handbetätigten Führungselement einer Handbetätigung des Prüfkopfes entspricht.

Die Erfindung besteht demnach vereinfacht ausgedrückt in einer Ergänzung der bisher üblichen automatisierten Prüfung mittels Prüfprogramm durch eine Betätigungsmöglichkeit, mit der der Prüfende den vom Manipulator getragenen Prüfkopf so bewegen kann, als würde er ihn unmittelbar mit der Hand führen. Damit ist es wieder möglich, das Wissen und Können des Prüfenden zur genaueren Feststellung und Analyse von Materialfehlern einzusetzen.

Die "Handbetätigung" des Prüfkopfes durch den Prüfenden kann bei der Erfindung noch durch eine weitgehende Simulierung der Umstände bei der Handprüfung verbessert werden. Zu diesem Zweck ist das Führungselement vorteilhaft in Form einer Prüfkopfnachbildung ausgeführt. Dies bedeutet, daß der Prüfende statt eines Bedienungselementes in Form eines normalen Handgriffes die ihm von der Handprüfung vertraute Form des Prüfkopfes betätigt, wenn der Manipulator zum Beispiel nach dem Auffinden eines Fehlers besonders feinfühlig gesteuert werden muß, um die genaue Lage oder die Abmessungen des Fehlers zu bestimmen. Dabei läßt sich der Prüfende wie bei der Handprüfung unmittelbar von den Anzeigen der Meßergebnisse auf dem Anzeigegerät leiten.

Ferner kann die Simulationseinrichtung vorteilhaft eine Nachbildung des Prüflings umfassen. Als Nachbildung genügt dabei unter Umständen ein Ausschnitt aus der Prüflingsoberfläche. Über dieser Nachbildung ist das Führungselement bewegbar angeordnet, so daß der Prüfende auch hier die ihm vertrauten Umstände bei der Handprüfung vorfindet und damit sein zum Teil unbewußtes Wissen und Können bei der Führung des Prüfkopfes einsetzt.

Die Nachbildung des Prüflings hat üblicherweise den Maßstab 1:1, damit die gleichen Umstände wie bei der Handprüfung vorliegen. Es kann aber auch vorteilhaft sein, die Nachbildung gegenüber dem Prüfling zu verkleinern oder zu vergrößern und den Maßstab der Nachbildung bei der Verstärkung der handbetätigten Fernsteuerung des Manipulators im Übertragungssystem zu berücksichtigen. Damit kann man unter Umständen eine feinfühligere Führung mit besseren Analyseergebnissen als bei einer 1:1 Nachbildung erhalten. Der Maßstab kann im übrigen auch für die einzelnen Freiheitsgrade des Manipulators unterschiedlich einstellbar sein, damit man sich besonderen Verhältnissen anpassen kann, zum Beispiel einer starken Krümmung der zu prüfenden Oberfläche.

Der Manipulator kann auch eine Einrichtung zur Markierung des Prüflings aufweisen, die von der Simulationseinrichtung aus zu betätigen ist. Hierdurch kann das Wiederfinden von festgestellten Fehlern zum Beispiel für eine Reparatur erleichtert werden. Zum Wiederfinden besitzt der Manipulator vorteilhaft einen Sensor für das Lokalisieren der Markierung. Darüber hinaus kann die Markierung auch in der Nachbildung des Prüflings abgebildet werden. Dies ist dann besonders vorteilhaft, wenn man zur näheren Untersuchung eines Materialfehlers besondere oder weitere Prüfköpfe einsetzen will, wie später noch näher beschrieben wird.

Bei einer vorteilhaften Ausführungsform der Erfindung weist der Manipulator mindestens teilweise getrennte Betätigungsmittel für die programmierte Steuerung und die Handsteuerung auf. Zum Beispiel kann die Handbetätigung zusätzlich zu den Mitteln für die nach zwei Koordinaten gesteuerte automatische Bewegung des Prüfkopfes Mittel für eine handbetätigte Drehung umfassen, die das Analysieren von Fehlern verbessert. Mit einer zusätzlichen Betätigung kann man aber auch zusätzlich Prüfköpfe einsetzen, die eventuell ein größeres Auflösungsvermögen oder eine besondere Richtcharakteristik haben. Ferner kann man bei einem Ultraschallprüfsystem mit Tandemanordnung der Prüfköpfe, die mit dem Führungselement gemeinsam verschoben werden, durch die zusätzliche Betätigung eine Relativbewegung der Prüfköpfe gegeneinander erreichen. Daneben kann die erfindungsgemäße Handsteuerung aber auch mit eigenen Betätigungsmitteln ausgeführt werden, d.h. mit Antriebseinrichtungen, die unabhängig von denen der programmierten Steuerung arbeiten. Hierbei ist lediglich dafür Sorge zu tragen, daß sich die unterschiedlichen Betätigungseinrichtungen nicht wechselseitig stören.

Zur näheren Erläuterung der Erfindung wird anhand der beiliegenden Zeichnung ein Ausführungsbeispiel beschrieben. Es zeigt die

Fig. 1 eine zum Teil schematisierte Darstellung des gegenständlichen Aufbaus der erfindungsgemäßen Prüfeinrichtung, während die

Fig. 2 in einem Blockschaltbild die Beeinflussungsmöglichkeit und den Datenfluß bei der Messung erkennen läßt.

In Fig. 1 ist mit 1 der Prüfling bezeichnet. Er ist nur als Ausschnitt in der Figur zu sehen. Es handelt sich um die zum Beispiel 15 cm dicke Wand eines metallischen Druckbehälters für einen Druckwasserreaktor. Dieser soll mit Ultraschall auf Risse geprüft werden. Zu diesem Zwecke wird an der Oberfläche 2 des Prüflings 1 ein Ultraschall-Prüfkopf 3 auf bestimmten, insbesondere reproduzierbaren Bahnen entlang bewegt. Der Prüfkopf 3 kann eine Mehrfachanordnung von Einzelköpfen sein und ist über eine Sende- und Empfangsleitung 5 mit einem Ultraschall-Prüfgerät 6 verbunden. Zu diesem gehört als Anzeigegerät ein Bildschirm 7, auf dem die bei einer Störung vorkommenden Ultraschallechos 8 zu sehen sind.

Der Prüfkopf 3 wird von einem als Ganzes mit 10 bezeichneten Manipulator betätigt. Der Manipulator 10 ist nur vereinfacht dargestellt und zwar dadurch, daß die elektrischen Antriebe für die Verstellung des Manipulators und die zu ihnen führenden Steuerleitungen gezeichnet sind. Es handelt sich im einzelnen um folgende jeweils einem Freiheitsgrad zugeordnete elektrische Antriebsmittel:

Der Motor 12 mit der Steuerleitung 13 ergibt eine geradlinige Verstellung in der horizontalen X-Richtung, wie durch den Pfeil 14 angedeutet ist. Der Motor 15 mit der Steuerleitung 16 bewirkt eine zur X-Richtung senkrechte Verstellung in Y-Richtung gemäß dem Pfeil 17. X- und Y-Richtung verlaufen parallel zu der Ebene der Oberfläche 2 des eben gedachten Prüflings 1. Der Motor 18 mit der Steuerleitung 19 dient zur Verstellung in der zu der Oberfläche 2 senkrechten Z-Richtung, die durch den Pfeil 20 angedeutet ist. Als weitere und zwar zusätzliche Funktion im Sinne der vorstehenden Ausführungen ist ein Motor 22 mit einer Steuerleitung 23 vorgesehen, der eine Drehung des Prüfkopfes nach dem Pfeil 21 veranlaßt.

Die Steuerleitungen 13, 16, 19 und 23 führen zu einem elektronischen Übertragungssystem 24, das in dem in Fig. 1 dargestellten Elektronikschrank 25 untergebracht ist. Das elektronische Übertragungssystem 24 umfaßt die im unteren Teil des Schrankes 25 angeordnete Leistungselektronik 26 sowie die Anpassung an die Antriebe und die Folgeregelung (Teil 27 im Elektronikschrank 25). Die darüber liegende Programmsteuerung 28 ermöglicht über Kodierschalter oder Datenträger, zum Beispiel Lochkarten 29, die Eingabe des Prüfprogramms für die automatische Prüfung, wie der Pfeil 30 zeigen soll.

Der obere Teil 32 des Elektronikschrankes 25 enthält die aus der Fig. 1 ersichtlichen Anzeigeelemente für die Position des Prüfkopfes 3. Die Anzeigeelemente 33 liefern zum Beispiel in digitaler Form Angaben über den Stand des Prüfkopfes, der in bezug auf die Bewegungsrichtungen der Stellmotoren 12, 15 und 18 aufgeschlüsselt ist.

Neben dem Elektronikschrank ist eine als Ganzes mit 35 bezeichnete Simulationseinrichtung vereinfacht dargestellt. Sie umfaßt eine ausschnittsweise Nachbildung 36 der Oberfläche 2 des Prüflings 1. Über der Nachbildung 36 ist ein Führungselement 37 beweglich angeordnet, das in der Form dem Prüfkopf 3 nachgebildet ist. Zwischen dem Führungselement 37 und der Nachbildung 36 sind Sensoren so angeordnet, daß Bewegungen, die dem Führungselement 37 relativ zur Nachbildung 36 von Hand vermittelt werden, nach den Freiheitsgraden der Stellmotoren 12, 15, 18 und 22 aufgeschlüsselt aufgenommen werden. Die Bewegungen werden somit in elektrische Signale umgesetzt und über das Verbindungskabel 40 dem Steuerungsteil 27 im Elektronikschrank 25 dann zugeführt, wenn die an der Simulationseinrichtung 35 vorgesehenen Schalter 42 betätigt werden. Damit wird nämlich die vom Programm 29 bestimmte automatische Steuerung des Manipulators 10 unterbrochen und die Handsteuerung durch das Führungselement 37 wirksam gemacht.

Beim Ausführungsbeispiel ist vorausgesetzt, daß mit dem Führungselement 37 nicht nur die drei Stellmotoren 12, 15 und 18 für die geradlinige Verstellung des Prüfkopfes 3 betätigt werden, wie sie auch von der Programmsteuerung 28 in Gang zu setzen sind. Vielmehr ist zur Analyse von Fehlern durch Prüfköpfe mit Schrägeinschallung noch eine Drehung mit dem Stellmotor 22 vorgesehen, die durch eine Drehung des Führungselementes um eine rechtwinklig zur Ebene der Nachbildung 36 stehende Achse gesteuert wird, und eine durch den Pfeil 21 angedeutete übereinstimmende Drehung des Prüfkopfes 3 auf der Oberfläche 2 des Prüflings 1 zur Folge hat. Vor allem mit dieser zusätzlichen Drehung kann der erfahrene Prüfer bei der simulierten Handprüfung anhand der Anzeigen auf dem Bildschirm 7 wesentlich genauere Aussagen über Form und Lage von Fehler, zum Beispiel die Länge und Richtung von Rissen, machen, als dies bei der rein automatischen Steuerung nach dem Prüfprogramm 29 möglich ist.

Die Fig. 1 zeigt, daß die Simulationseinrichtung 35 noch zwei Stellknöpfe 45 und 46 auf beiden Seiten der Nachbildung 36 aufweist. Damit können Zusatzfunktionen gesteuert werden. Zum Beispiel kann der Stellknopf 45 dazu dienen, in einer durch die Handsteuerung eingenommenen Position des Manipulators mit einem Tandemprüfsystem eine Änderung des Abstandes der Prüfköpfe zu erhalten, die die Prüfung unterschiedlicher Tiefenbereiche des Prüflings ermöglicht. Mit dem Stellknopf 46 könnte zum Beispiel bei Wirbelstromprüfungen für den "Handbetrieb" die Prüffrequenz verändert werden.

Durch Betätigen eines der Schalter 42 kann man auch eine Markierung auf der Oberfläche 2 des Prüflings 2 setzen. Die Markierung kann eine elektrische, magnetische oder optische Kennzeichnung sein. Es kann sich aber auch um eine mechanische Einwirkung etwa wie bei einem Körner handeln, die zum Beispiel ihrerseits wieder durch Ultraschallmessung oder durch magnetische Erfassung gegebenenfalls mit Hilfe von Wirbelstrom wieder zu

0025532

finden ist.

Die Fig. 2 zeigt den regeltechnischen Zusammenhang des in Fig. 1 dargestellten Prüfsystems. Man erkennt, daß der Ultraschall-Prüfkopf 3 über die Leitung 5 mit dem Ultraschallgerät 6 verbunden ist, so daß auf dem Monitor 7 die Anzeigen 8 unmittelbar für die Beobachtung durch den Prüfenden zur Verfügung stehen, der in Fig. 2 durch den Kreis 47 angedeutet ist. Dem Ultraschall-Prüfkopf 3 sind Positionsgeber 50 zugeordnet, die zusammen mit dem Ultraschall-Prüfkopf von den Antrieben 12, 15, 18 und 22 betätigt werden. Die Antriebe gehören zu dem Manipulator 10. Dieser wird wiederum von einer Steuereinheit 48 betätigt. Sie entspricht praktisch den Teilen 26 und 27 des Elektronikschrankes 25 und wird zusätzlich über die Leitung 51 mit den Istwerten der Position des Prüfkopfes 3 versorgt. Diese gelangen außerdem über eine weitere Leitung 52 zu den Positionsanzeigen 33, die damit ebenfalls dem Menschen 47 zur Verfügung stehen. Deshalb kann dieser über die Simulationseinrichtung 35 wie bei einer Handsteuerung auf den Prüfkopf 3 einwirken, weil er gemäß dem Pfeil 54 der Steuereinheit 48 eine Führungsgröße vorgibt, die aus der Differenz zu den Positions-Istwerten eine Steuergröße ableitet. Die Steuergröße wird dann entsprechend dem Pfeil 56 auf den Manipulator 10 gegeben, so daß entsprechend dem Pfeil 58 durch die Bewegung der Antriebe die Verstellung des Ultraschall-Prüfkopfes 3 wie bei einer direkten Handbetätigung erfolgt.

12 Patentansprüche
2 Figuren

Patentansprüche

1. Prüfeinrichtung zur Feststellung und Analyse von Materialfehlern an einem Prüfling, insbesondere an druckführenden Komponenten für Nuklearanlagen, mit einem durch elektrische Betätigung in mindestens zwei Freiheitsgraden fernsteuerbaren Manipulator zur Bewegung eines Prüfkopfes, einem Prüfgerät zur Versorgung des Prüfkopfes und Auswertung seiner Signale und einem Anzeigegerät für die Meßergebnisse des Prüfkopfes, wobei der Manipulator mit einem Prüfprogramm zum automatischen Abfahren eines vorgegebenen Weges an der Oberfläche des Prüflings versehen ist, d a d u r c h g e k e n n z e i c h n e t , daß neben der Steuerung des Manipulators mittels Prüfprogramm eine Fernsteuerung mit einem handbetätigten Führungselement (37) vorgesehen ist, das dem Anzeigegerät (7) benachbart in einer Simulationseinrichtung (35) für den Prüfling (1) angeordnet und über ein elektronisches Übertragungssystem (24) mit dem Manipulator (10) so verbunden ist, daß die Steuerung des Prüfkopfes (3) mit dem handbetätigten Führungselement (37) einer Handbetätigung des Prüfkopfes entspricht.

2. Prüfeinrichtung nach Anspruch 1, d a d u r c h g e k e n n z e i c h n e t , daß das Führungselement (37) in Form einer Prüfkopfnachbildung ausgeführt ist.

3. Prüfeinrichtung nach Anspruch 1 oder 2, d a d u r c h g e k e n n z e i c h n e t , daß die Simulationseinrichtung (35) eine Nachbildung (36) mindestens eines Teils der Oberfläche (2) des Prüflings (1) umfaßt und daß das Führungselement (37) über diese Nachbildung bewegbar angeordnet ist.

4. Prüfeinrichtung nach Anspruch 3, d a d u r c h g e k e n n z e i c h n e t, daß die Nachbildung (36) des Prüflings (1) den gleichen Maßstab aufweist wie eine lineare Verstärkung im Übertragungssystem (24) bei der handbetätigten Fernsteuerung des Manipulators (10).

5. Prüfeinrichtung nach Anspruch 4, d a d u r c h g e k e n n z e i c h n e t, daß der Maßstab für die einzelnen Freiheitsgrade des Manipulators (10) unterschiedlich einstellbar ist.

6. Prüfeinrichtung nach einem der Ansprüche 1 bis 5, d a d u r c h g e k e n n z e i c h n e t, daß der Manipulator (10) eine Einrichtung zur Markierung des Prüflings (1) aufweist, die von der Simulationseinrichtung (35) aus zu betätigen ist.

7. Prüfeinrichtung nach Anspruch 3 oder 4 und Anspruch 6, d a d u r c h g e k e n n z e i c h n e t, daß der Manipulator (10) einen Sensor für das Lokalisieren der Markierung aufweist.

8. Prüfeinrichtung nach Anspruch 6 oder 7, d a d u r c h g e k e n n z e i c h n e t, daß die Markierung in der Nachbildung (36) des Prüflings (1) abgebildet wird.

9. Prüfeinrichtung nach einem der Ansprüche 1 bis 8, d a d u r c h g e k e n n z e i c h n e t, daß der Manipulator (10) mindestens teilweise getrennte Betätigungsmittel für die Steuerung durch das Prüfprogramm und die Handsteuerung aufweist.

0025532

10. Prüfeinrichtung nach Anspruch 9, d a d u r c h g e k e n n z e i c h n e t, daß die Handsteuerung zusätzliche Betätigungsmittel umfaßt.

11. Prüfeinrichtung nach Anspruch 10, d a d u r c h g e k e n n z e i c h n e t, daß die Handsteuerung die Betätigung zusätzlicher Prüfköpfe umfaßt.

12. Prüfeinrichtung nach Anspruch 10 oder 11, d a - d u r c h g e k e n n z e i c h n e t, daß ein Ultraschall-Prüfsystem mit Tandemanordnung der Prüfköpfe mit dem Führungselement zu verschieden ist und daß zusätzlich eine Relativbewegung der Prüfköpfe vorgesehen ist.

0025532

79 P 9351

FIG 1

FIG 2